# EUROPÄISCHE PATENTSCHRIFT

(11) **EP 2 190 639 B1**
(45) Veröffentlichungstag und Bekanntmachung des Hinweises auf die Patenterteilung: **09.10.2013**
(21) Anmeldenummer: 08828049.0
(22) Anmeldetag: 14.08.2008
(51) Int. Cl.: B29B 9/12, C08K 3/00, C08K 5/00, C08J 3/12

(54) **EXTRUSIONSVERFAHREN ZUR HERSTELLUNG EINES KUNSTSTOFFGRANULATES MIT EINEM STATISCH DISSIPATIVEN EFFEKT**
EXTRUSION PROCESS FOR PRODUCING PLASTIC GRANULES HAVING A STATICALLY DISSIPATIVE EFFECT
PROCÉDÉ D'EXTRUSION POUR PRODUIRE UN GRANULAT DE MATIÈRE PLASTIQUE À EFFET DISSIPATIF STATIQUE

(30) Priorität: 17.08.2007 DE 102007039380
(43) Veröffentlichungstag der Anmeldung: 02.06.2010
(73) Patentinhaber: GRAFE Color Batch GmbH, 99444 Blankenhain (DE)
(72) Erfinder: GRAFE, Clemens, 99425 Weimar (DE); CARO, Juan Carlos, 99425 Weimar (DE)
(74) Vertreter: Freitag, Joachim
(86) Internationale Anmeldenummer: PCT/DE2008/050027
(87) Internationale Veröffentlichungsnummer: WO 2009/024144

(56) Entgegenhaltungen:
- EP-A- 1 114 840
- DE-A1- 10 217 232
- GB-A- 2 424 899
- US-A- 4 746 697
- US-A1- 2004 131 853

## Beschreibung

Die Erfindung betrifft ein Extrusionsverfahren zur Herstellung eines Kunststoff-granulates mit einem statisch dissipativen Effekt.

Elektrostatische Aufladungen werden durch die Reibung zwischen zwei in Kontakt stehenden Materialoberflächen generiert, die grundsätzlich unterschiedliche Ladungsvorzeichen, aufgrund von Elektronentransportvorgängen, aufweisen.

Eine dieser Materialoberflächen verliert z. B. Elektronen und lädt sich positiv auf, während die andere diese Elektronen aufnimmt und sich negativ auflädt.

Die Stärke dieser Aufladung hängt von folgenden Faktoren ab:

- Grad des Kontaktes zwischen den zwei Oberflächen,

- Reibungseigenschaften der Materialien,

- Luftfeuchtigkeit und

- elektrischen Eigenschaften der Kunststoffe, wie z. B. der Widerstand und die Dielektrizitätskonstante (kleiner Wert bedeutet, dass die Bereitschaft zur Aufladung hoch ist).

Durch die Anwesenheit von elektrisch geladenen Teilchen auf der Oberfläche von Kunststoffartikeln können Störungen beim Transport, Verpacken und Lagern auftreten, wenn die daraus nachfolgenden Entladungen in der Nähe von empfindlichen Maschinen und Geräten auftreten. Darüber hinaus besteht bei dem plötzlichen Entladen elektrisch geladener Teilchen die Gefahr der Entzündung explosionsfähiger Gasgemische sowie die Gefahr des Ausfalls von elektronischen lebenserhaltenden Geräten wie Herzschrittmachern, bei Menschen, die diese Maschinenteile anfassen.

Letztendlich beeinflusst die unkontrollierte Anziehung von Schwebpartikeln und Stäuben das Aussehen, die Optik und die Funktion von dick- und dünnwandigen Teilen, die im ständigen Kontakt mit Luftströmen stehen.

Der Zusammenhang zwischen Staubanziehung und hoher Algenbildung auf ungeschützten Kunststoffteilen ist bereits belegt. Algen vermindern nicht nur das optische Aussehen des Produktes, sie verringern auch die gewünschte Lichtdurchlässigkeit, wie in dem Fall von Bedachungen aus Stegdoppelplatten. Algen tragen zusätzlich zu mechanischen Abbaureaktionen bei. Die Folge: die Lebensdauer des eingesetzten Produktes wird verkürzt.

Im Allgemeinen bestimmt man den Antistatik-Effekt durch Messungen des Oberflächen- (nach ASTM D257) oder des Durchgangswiderstandes (nach DIN 53482) auf einer Seite und der Entladungszeit bei dem Halbwert der angelegten Spannung (nach DIN 53486E) auf der anderen Seite.

Um die Probleme der elektrostatischen Aufladung an Kunststoffen zu minimieren, haben sich bereits einige Mittel bewährt. Zum Stand der Technik gehören sowohl volumen- als auch oberflächenaktive Substanzen mit unterschiedlichem chemischen Hintergrund und somit unterschiedlicher Wirkungsweise.

Man kann diese verfügbaren Materialien unterteilen in:

- [oberflächenaktive] kationische Antistatika: wie quaternäre Phosphonium- und Ammonium-Salze

- [oberflächenaktive] anionische Antistatika: wie Alkylsulfonate, Alkylphosphonate, Alkylthiocarbamate, Chloride, Nitrate, Hydrophosphate.

- [oberflächenaktive] nicht-ionische Antistatika: wie Ethyloxylierte und Propyloxylierte langkettiger Alkohole, langkettiger Amine und Fettsäureamide, Polyethylenglykolester oder Alkylphenolester von Fettsäuren, Glycerylmono, -diester und Sorbitolester von Fettsäuren.

- [oberflächenaktive] organometallische Antistatika: wie Alkyltitanate und Alkylzirkonate

- [volumenaktive] leitfähige Materialien: wie organisch modifizierte Nanoclays, nanoskalige Metalloxide, Carbon Black (Leitruß), Graphit, Nanotubes, Metallpulver und Fasern von Kupfer und Aluminium, Kohlefasern, metallisiertes Glas, Intrinsisch leitfähigen Polymeren (z.B. Polyacetale, Polypyrrole, Polythiophene, Polyaniline) und Polyamid-polyether-blockamide.

Weit verbreitet, weil auch die preiswerteste und effektivste Variante, bietet die Verwendung von Leitruß. Man nutzt gezielt die Eigenschaft von Leitruß, Strom zu leiten. Üblicherweise liegen die Ruß-Partikel in polyolefinbasierten Granulaten (PP, LD/HD-PE) in Mengen zwischen 5 bis 25 Gew. %, je nach Qualität und Typ des Ruß, dispergiert vor. Spritzguss- und Extrusionsartikel aller Art können aus diesen Compounds hergestellt werden. Folienqualitäten sind auch erhältlich, jedoch bedürfen sie einen hoheren Dispergieraufwand. Die leitfähige Wirkung ist sofort erhältlich, unabhängig von der Luftfeuchtigkeit, sie ist zeitlich unbegrenzt und sowohl für Massenals auch für High-Tech-Anwendungen geeignet.

Leitruße weisen, gegenüber anderen Varianten, geringere Anschaffungspreise auf, bieten eine sehr lange Lebensdauer für die leitfähige Ausrüstung und können durch übliche Techniken gut verarbeitet werden.

Die Leitfähigkeit hängt jedoch sehr stark von den Ruß-Konzentrationen im Endprodukt ab. Ein Percolationsverhalten wird deshalb beobachtet. In Abhängigkeit der Mischungsverhältnisse und der Verarbeitungsbedingungen gibt es einen schmalen Bereich, wo sich die Leitfähigkeit bei geringen Konzentrationsänderungen des Leitruß schlagartig erhöht oder verringert.

Ein großer Nachteil ist, dass diese Materialien nicht einfärbbar sind und meist nur in schwarz vorliegen. Durch die hohe Zugabe an Leitruß können sich einige mechanische Eigenschaften verschlechtern. Die Leitfähigkeit dieser Materialien ändert sich auch bei mechanischer Belastung, Dehnung oder Streckung. Somit können bestimmte Leitfähigkeitswerte bei gereckten Faser- und Folienanwendungen über die Dauer der Belastung nicht immer gewährleistet werden.

Neueste Entwicklungen auf dem Gebiet von Hochleistungsantistatika und leitfähigen Additiven basieren auf nanoskaligen Metalloxiden des Indiums, Zinns, Antimons oder Zirkoniums sowie auf Single-/Multiwall Carbon Nanotubes (abgekürzt SWCNT und MWCNT).

Generell müssen alle diese neuen Materialien im Endprodukt möglichst in geringen Konzentrationen als Nanopartikel vorliegen, ansonsten können sie nicht ihre erwartete Wirkung entfalten, die den hohen Anschaffungspreis auch rechtfertigen würde. Es ist auch zu berücksichtigen, dass die Polarität des Kunststoffträgers eine große Rolle spielt. In polaren Kunststoffen, wie PC, PA und PBT sind die Resultate deutlich besser als in unpolarem PP. Jedoch liegt in leitfähigen PP- und HDPE-Artikeln die breite Massenanwendung, was den bis dato fehlenden kommerziellen Durchbruch der Nanotubes erklärt.

Ähnlich verhält es sich mit intrinsisch leitfähigen Materialien (ICP) wie Polyanilinen, Polythiophene, etc, die auch eine dauerhafte leitfähige Wirkung gewährleisten. Sie geben dem Endprodukt eine tiefdunkle Einfärbung (grün, grau, braun), die nicht durch andere Farben überdeckt werden kann. Diese ICP-Partikel sind darüber hinaus auch sehr scherempfindlich. Ihre Wirkung kann demzufolge durch die vorhandenen maschinellen Verarbeitungsbedingungen außer Kraft gesetzt werden, weil ihnen durch die Scherung im Extruder selbst mechanische Beschädigungen widerfahren. ICP, wie Ruß-Materialien, erzeugen dauerhafte leitfähige Eigenschaften. Der Anschaffungspreis liegt dennoch über den von kommerziell verfügbaren Leitrußen.

Von allen kommerziell verfügbaren [volumenaktiven] leitfähigen Produkten stellen solche polymerische Systeme auf Basis Polyamid-Polyether-Block-Amide (Adipinsäurecaprolactam-Polyetherglykol-Copolymere) zur Zeit die beste technische Lösung dar. Ein statisch dissipativer (leitender) Effekt (um 10⁷ Ω) sowohl an der Oberfläche als auch im Volumen des dickwandigen Kunststoffteils , unabhängig von der umgebenden Luftfeuchtigkeit, kann erzeugt werden. Diese Kunststoffartikel können auch ohne Verlust der Leitfähigkeit eingefärbt werden. Jedoch kommen einige Nachteile zum Vorschein, die die Suche nach anderen Alternativprodukten notwendig macht. Anwendungen in PP und PC/ABS sind bekannt, bei anderen Kunststoffen (PA, EVA) werden sie problematisch.

Die Materialkosten per kg moditiziertes Bauteil werden erhöht, bedingt durch die hohen Zugaben von ca. 10 bis 15 Gew%, um den gewünschten Antistatik-Effekt erzeugen zu können. Diese hohen Dosierungen sind zuweilen die Ursache für die Verschlechterung einiger mechanischer Eigenschaften an den Endprodukten.

Die Verstärkung von dünnwandigen Artikeln mit diesen PA-Polyether-Copolymeren wird wegen der daraus entstandenen unzureichenden Qualität nicht durchgeführt. Faseranwendungen kommen wegen der fehlenden mechanischen Festigkeiten und der hohen Zugabekonzentrationen auch nicht in Frage.

Nachfolgend sind solche organische Substanzen (interne Antistatika) aufgeführt, die eine oberflächenaktive Wirkung ("Surfactants") ausüben können:

N-haltige Fettderivate, wie primäre, sekundäre, tertiäre Amine, Alkyldiamine, quaternäre Ammoniumionverbindungen, ethoxylierte quaternäre Ammoniumionver-bindungen, ethoxylierte Alkylamine, ethoxylierte Alkyldiamine, Alkylaminoacetate, Diaminodiacetate, Alkylaminoxide, Aliphatische Amide, ethoxylierte Alkylamide, organische Moleküle mit Heteroatomen wie Alkylsulfonate sowie Fettsäurepolyester (z.B. Glycerinmonostearat) und generell anionische und nichtionische Tenside.

Die Wirkung dieser internen Antistatika basiert auf der Migration der Wirksubstanzen aus der Polymermatrix aufgrund der unterschiedlichen Polarität zwischen dem Polymer (niedrig) und dem Antistatikum (hoch).

Diese Surfactants zeichnen sich gewöhnlich durch eine langkettige hydrophobe Alkylgruppe und eine hydrophile, um ein Heteroatom aufgebaute Komponente aus.

In Abhängigkeit der Umgebungsbedingungen richten sich diese hydrophilen und hydrophoben Komponenten unterschiedlich aus.

Die polaren hydrophilen chemischen Gruppen der Antistatika orientieren sich mit der Zeit und in Abhängigkeit der umgebenden Luftfeuchtigkeit nach außen an der Grenzfläche Kunststoff/Umgebungsluft, während sich die unpolaren, lipophilen, i. d. R. langkettigen kohlenwasserstoffhaltigen Gruppen zum Inneren des Kunststoffes hin positionieren.

An der Grenzfläche Polymer/Luft ragen die hydrophilen Gruppen aus der Oberfläche heraus und ziehen Feuchtigkeit aus der Umgebung an, während die hydrophobe Alkylkette nach innen zeigt. Durch das Anziehen von Feuchtigkeit an der Oberfläche können Elektronen durch die vorhandenen dissoziierten Ionen leichter transportiert werden, d. h. der elektrische Widerstand wird kleiner.

In der Patentschrift US 4,746,697 A wird eine Mischung aus Kunststoff, Lithiumnitrat und einem Antistatikum offenbart. Es wird empfohlen, zum Zwecke der besseren Dispergierung Lithiumnitrat statt Lithiumchlorid zu verwenden. Weiterhin wird gezeigt wie das Salz (Lithiumnitrat oder Lithiumchlorid) vordispergiert werden soll. Es geht über den Weg einer Auflösung des Salzes in Wasser, bevor es mit dem Antistatikum im geschmolzenen Zustand, unmittelbar vor Zugabe in den Extruder, in Kontakt kommt. Dadurch soll die Dispergierung des Salzes während der Extrusion und im Endprodukt (Folie) verbessert werden.

In Patentschrift GB 1 118 324 A wird eine antistatische Mischung aus Fettsäuredialkylamiden mit anorganischen Salzen offenbart. Als eine besonders gute Methode, um die Dispergierung des Salzes mit der antistatisch wirkenden organischen Substanz zu verbessern, wird vorgeschlagen, das Trägermaterial (Kunststoff) mit einer vorab gefertigten Lösung der aktiven Materialien (Salz und Antistatik-Substanz) in einem nicht näher offenbarten Lösungsmittel in Kontakt zu bringen. Beim anschließenden Extrusionsprozess sollte das verwendete Lösungsmittel entfernt werden, wobei die Dispergierung besser sein sollte.

Die Erfindung bietet die Möglichkeit zur Herstellung eines Kunststoffgranulates, wodurch sich ein thermoplastisches Erzeugnis herstellen lässt, welches einen maximalen spezifischen Oberflächenwiderstand von 10⁸ Ω aufweist, ohne die Verwendung von Metallfasern, Metalloxiden, Graphit, Leitruß, intrinsisch leitfähigen Polymeren, Single- /Multiwall Carbon Nanotubes, organisch modifizierten Nanoclays oder Polyamid-Polyether-Block-Amiden (genauer: solche auf Basis Adipinsäure-Caprolactam-Polyetherglykol-Copolymere und verwandte Substanzen), wobei sich das Kunststoffgranulat durch eine bessere Dispergierung der darin enthaltenen wirksamen Substanzen auszeichnet.

Erfindungsgemäß wird die Aufgabe bei einem Extrusionsverfahren zur Herstellung eines Kunststoffgranulates dadurch gelöst, dass zunächst in einer Vorstufe ein Gemisch aus Lithiumchlorid und Anticaking-Mitteln aus der Gruppe der Kreide, Talkum, Silica, Titandioxid, Zinksulfid, Bariumsulfat und Aluminiumoxid auf eine Partikelgröße von d90 = 20 µm gemahlen wird, daran anschließend werden die Ausgangsstoffe

a) mindestens ein organisches, oberflächenaktives internes Antistatikum,

b) ein thermoplastischer Kunststoff und

c) das Gemisch

in reiner Form, einzeln oder als Mischung bereitgestellt, um abschließend entweder durch die gleiche oder durch unterschiedliche gravimetrische oder volumetrische Dosiereinrichtungen, bei einer vom thermischen Kunststoff abhängigen, vorab eingestellten Verarbeitungstemperatur der Heizzonen der Extrusionsmaschine, direkt in die Extrusionsmaschine gleichzeitig, nacheinander oder getrennt voneinander, zugegeben zu werden und die daraus entstandene Polymerschmelze entweder in Strangform durch ein unter normalem Umgebungsdruck betriebenes Wasserbad abgekühlt und granuliert wird oder durch ein direkt und unmittelbar am Extruderendkopf angeschlossenes, unter Druck betriebenes Unterwassergranuliersystem, als Linsen- , Kugel- oder ellipsoides Granulat ohne Schnittkanten, bereitgestellt wird. Das Gemisch aus Lithiumchlorid und Anticaking-Mitteln wird dabei vorteilhaft im Verhältnis 90 Gew.-% zu 10 Gew.-% bereit gestellt werden. Ebenfalls als günstig erweist es sich, wenn das Anticaking- Mittel aus Kreide und Silica im gleichen Verhältnis bereit gestellt wird.

Die Erfindung soll nachstehend anhand von Ausführungsbeispielen näher erläutert werden. Es handelt sich um Beispielrezepturen für Masterbatches und Compounds.

Masterbatch 1 (MB1)

Man stellt ein Masterbatchgranulat unter Anwendung der folgenden Rezeptur her:

5 Gew.% Glycerinmonostearat

5 Gew. % Ethoxyliertes Alkylamin (Alkylkettenlänge aus C13 - C15)

5 Gew% Lithiumchlorid

0,25 Gew% Kreide

0,25 Gew% Silica

85 Gew%% PP

Compound 1 (C1)

Man stellt ein Compoundgranulat unter Anwendung der folgenden Rezeptur her:

0,5 Gew.% Glycerinmonostearat

0,5 Gew. % Ethoxyliertes Alkylamin (Alkylkettenlänge aus C13 - C15)

0,5 Gew% Lithiumchlorid

0,025 Gew% Kreide

0,025 Gew% Silica

98,45 Gew% PP

In einer Vorstufe werden dabei sowohl bei der Herstellung des Masterbatches als auch des Compounds das Gemisch aus dem Lithiumchlorid, der Kreide und dem Silica zunächst auf eine Partikelgröße von d90 = 20 µm gemahlen.

Die Erfindung gelingt unter Verwendung eines ein- oder doppelschneckigen Extruders, Ringextruders oder horizontal oszillierenden Ko-Kneters zur extrusionstechnischen Verarbeitung der Ausgangssubstanzen zu einem homogenen Blend in Granulatform.

Die Benutzung gravimetrischer oder volumetrischer Dosiereinrichtungen, wodurch alle Ausgangsstoffe gleichzeitig oder nacheinander in die Extruderschnecke eindosiert werden, ist ohne Weiteres möglich.

Durch die Einstellung einer vom Trägermaterial abhängigen Verarbeitungstemperatur am Extruder oder Kneter wird diese vorangegangene Mischung geschmolzen und extrudiert. Diese Schmelze kann entweder in Form eines festen Stranges unter normalen Umgebungsbedingungen durch ein Wasserbad abgekühlt und durch ein Granulator in Zylinderform geschnitten werden oder erst am Extruderendkopf unter einem geschlossenen, unter Druck betriebenen Unterwassergranuliersystem abgekühlt und als Linsen-, Ellipse oder Kugelgranulat verformt werden.

Für die Produktion von Spritzgussteilen, Extrusionswaren, Platten, Folien, Spin- und Bändchenfasern nehme man entweder das Masterbatch MB1 und dosiert es von 1 bis zu 10 Gew % zu einem geeigneten PP-Träger oder das Compound C1 und gibt es entweder unverdünnt zu oder zusammen mit weiteren Substanzen (Zuschlagstoffe, Farbmasterbatches) in den Extruder, Kneter oder in die Spritzgussmaschine.

Weiterhin ist die wahlweise Zugabe eines phosphidischen und/oder phenolischen Thermostabilisators und/oder eines Antioxydanten zum Schutz wärmebedingter Abbaureaktionen des Trägermaterials oder Abbaureaktionen bedingt durch chemische Einwirkung von Sauerstoff oder Radikale möglich.

Auf die Anwendung dieser Granulate zur statisch-dissipativen/leitfähigen Verstärkung von dünn- und dickwandigen, gefärbten oder ungefärbten, unverstärkten oder mechanisch verstärkten Artikeln wie Spritzguss-, Extrusionsware, Folien, Netze, Platten, Fasern und Filamente sei ausdrücklich hingewiesen.

## Patentansprüche

1. Extrusionsverfahren zur Herstellung eines Kunststoffgranulates bestehend aus den folgenden Schritten: - in einer Vorstufe wird ein Gemisch aus Lithiumchlorid und Anticaking- Mitteln aus der Gruppe der Kreide, Talkum, Silica, Titandioxid, Zinksulfid, Bariumsulfat und Aluminiumoxid auf eine Partikelgröße von d90 = 20 µm gemahlen, - daran anschließend werden die Ausgangsstoffe a) mindestens ein organisches, oberflächenaktives internes Antistatikum, b) ein thermoplastischer Kunststoff und c) das Gemisch in reiner Form, einzeln oder als Mischung bereitgestellt, um - abschließend entweder durch die gleiche oder durch unterschiedliche gravimetrische oder volumetrische Dosiereinrichtungen, bei einer vom thermoplastischen Kunststoff abhängigen, vorab eingestellten Verarbeitungstemperatur der Heizzonen der Extrusionsmaschine direkt in die Extrusionsmaschine gleichzeitig, nacheinander oder getrennt voneinander zugegeben zu werden und die daraus entstandene Polymerschmelze entweder in Strangform durch ein unter normalem Umgebungsdruck betriebenes Wasserbad abgekühlt und granuliert wird oder durch ein direkt und unmittelbar am Extruderendkopf angeschlossenes, unter Druck betriebenes Unterwassergranuliersystem, als Linsen- , Kugel- oder ellipsoides Granulat, ohne Schnittkanten bereitgestellt wird.

2. Extrusionsverfahren nach Anspruch 1, **dadurch gekennzeichnet, dass** das Gemisch aus Lithiumchlorid und Anticaking-Mitteln im Verhältnis 90 Gew.-% zu 10 Gew.-% bereit gestellt wird.

3. Extrusionsverfahren nach Anspruch 1 und 2, **dadurch gekennzeichnet, dass** das Anticaking-Mittel aus Kreide und Silica im gleichen Verhältnis bereit gestellt wird.

## Claims

1. An extrusion process for producing a plastic granulate consisting of the following steps: - in a preliminary step, a preliminary mixture of lithium chloride and anticaking agents from the group of chalk, talcum, silica, titanium dioxide, zinc sulfide, barium sulfate and aluminium oxide is ground to a particle size of d90 = 20 µm, - then the starting substances a) at least one organic, surface-active internal antistatic material, b) a thermoplastic material and c) the preliminary mixture are prepared in pure form, individually or as a mixture, in order to - finally be sent directly to the extrusion machine at the same time, in succession or separately from each other either via the same or via different gravimetric or volumetric dispensing devices at a processing temperature of the heating zones of the extrusion machine that is preset depending on the thermoplastic material, and the resulting polymer melt is either cooled and granulated in strand form via a water bath operated at normal ambient pressure or is prepared as lens-shaped, spherical or ellipsoidal granulate without cut edges via an underwater granulation system operated under pressure and connected directly and immediately to the end of the extruder head.

2. An extrusion process according to claim 1, **characterized in that** the mixture of lithium chloride and anticaking agents is prepared in a ratio of 90 wt% to 10 wt%.

3. An extrusion process according to claim 1 and 2, **characterized in that** the anticaking agent is prepared from chalk and silica in the same proportion.

## Revendications

1. Procédé d'extrusion pour produire un granulat de matière plastique composé des étapes suivantes: - dans une étape préliminaire, un mélange préliminaire de chlorure de lithium et d'anti-agglomérants de la groupe de craie, talc, silice, dioxyde de titane, sulfure de zinc, sulfate de baryum et oxyde d'aluminium est moulu jusqu'à une taille de particules de d90 = 20 µm, - puis les substances de départ a) au moins une matière antistatique interne, qui est organique et tensioactive, b) une matière thermoplastique et c) le mélange préliminaire sont préparés sous forme pure, individuellement ou comme mélange, pour - être finalement ajouté directement dans la machine d'extrusion en même temps, successivement ou séparément l'un de l'autre par la même ou par différents dispositifs de dosage gravimétriques ou volumétriques à une température de traitement des zones de chauffage de la machine d'extrusion qui est pré-établie dépendant de la matière thermoplastique, et la fonte de polymère qui y résulte est refroidie et granulée en forme de corde par un bain d'eau entraîné sous pression ambiante normale ou est préparée comme granulat en forme de lentille, sphérique ou ellipsoïde sans bords de coupe par un système de granulation sous eau entraîné sous pression et lié directement et immédiatement à la tête d'extrusion terminale.

2. Procédé d'extrusion selon la revendication 1, **caractérise en ce que** le mélange de chlorure de lithium et d'anti-agglomérants est prépare dans une proportion de 90 % en poids à 10 % en poids.

3. Procédé d'extrusion selon la revendication 1 et 2, **caractérise en ce que** l'anti-agglomérant est prépare de craie et silice dans la même proportion.
